# EUROPÄISCHE PATENTSCHRIFT

(11) **EP 1 522 442 B1**
(45) Veröffentlichungstag und Bekanntmachung des Hinweises auf die Patenterteilung: **06.06.2012**
(21) Anmeldenummer: 04020285.5
(22) Anmeldetag: 26.08.2004
(51) Int. Cl.: B60J 7/02

(54) **Fahrzeugfestes Führungssytem und Verfahren zum Herstellen eines fahrzeugfesten Führungssystems**
Vehicle fixed guiding device and method for the construction of such vehicle fixed guiding device
Système de guidage fixé au véhicule et méthode pour la construction de ce système de guidage fixé au véhicule

(30) Priorität: 06.10.2003 DE 10346346
(43) Veröffentlichungstag der Anmeldung: 13.04.2005
(73) Patentinhaber: Roof Systems Germany GmbH, 63128 Dietzenbach (DE)
(72) Erfinder: Bendel, Andreas, 65462 Ginsheim-Gustavsburg (DE); Röder, Joachim, 63165 Mühlheim (DE); Grimm, Rainer, 60599 Frankfurt (DE); Böhm, Horst, 60599 Frankfurt (DE)
(74) Vertreter: Prinz & Partner

(56) Entgegenhaltungen:
- US-A- 4 811 985
- US-A- 5 149 170
- US-A- 5 795 016
- PATENT ABSTRACTS OF JAPAN Bd. 009, Nr. 117 (M-381), 22. Mai 1985 (1985-05-22) & JP 60 004418 A (NISSAN JIDOSHA KK), 10. Januar 1985 (1985-01-10)

## Beschreibung

Die Erfindung betrifft ein fahrzeugfestes Führungssystem für verstellbare Fahrzeugteile, mit wenigstens einer ersten Führungsschiene für das als Deckel eines Schiebe-Hebedachs ausgebildete erste Fahrzeugteil.

Bei einem Fahrzeugschiebe-Hebedach sind seitlich des Deckels zu dessen Führung zwei fahrzeugfeste Führungsschienen vorgesehen. Abschnitte der Führungsschienen dienen z.B. auch der Führung eines weiteren Deckels, des Schiebehimmels, d.h. des unterhalb des Deckels angeordneten, separat verschieblichen Sonnenschutzes, oder weiterer Sonnenschutzsysteme.

Die US 5,795,016 A offenbart ein gattungsgemäßes Führungssystem für Kraftfahrzeuge, mit einem beweglichen Dachabschnitt, wobei seitlich angeordnete Gleitstücke des Dachabschnitts in einer fahrzeugfesten Führungsschiene längsverschieblich geführt sind. Die Führungsschiene ist zumindest zweiteilig aufgebaut, mit einem geraden Führungsabschnitt, der beispielsweise aus einer extrudierten Aluminiumlegierung besteht, und einem gekrümmten Führungsabschnitt, der beispielsweise ebenfalls aus der Aluminiumlegierung besteht, wobei der gekrümmte Führungsabschnitt jedoch als Gussteil hergestellt wird und an einem axialen Ende des geraden Führungsabschnitts angeordnet ist. Ein verstellbarer Sonnenschutz ist nicht vorgesehen.

Die US 5,149,170 A zeigt ein Führungssystem gemäß dem Oberbegriff des Anspruchs 1.

Aufgabe der Erfindung ist es, ein einfacheres, vor allem kostengünstigeres Führungssystem zu schaffen, das dennoch die erforderlichen technischen Eigenschaften aufweist. Zudem soll ein kostengünstiges Verfahren zum Herstellen eines einfachen, die technischen Anforderungen erfüllenden Führungssystems angegeben werden.

Das fahrzeugfeste Führungssystem nach der Erfindung hat wenigstens eine erste Führungsschiene für das als Deckel eines Schiebe-Hebedachs ausgebildete erste Fahrzeugteil und wenigstens eine zweite Führungsschiene für das als Sonnenschutzsystem, insbesondere Sonnenschutz, Rollo oder Himmelrahmen ausgebildete zweite Fahrzeugteil. Die erste und die zweite Führungsschiene bestehen aus zwei unterschiedlichen Materialien und sind formschlüssig miteinander verbunden. Die beiden Führungsschienen werden an ihre unterschiedlichen Belastungsanforderungen durch Verwendung unterschiedlicher Materialien optimaler angepaßt. Die bislang kompliziert herzustellenden Führungssysteme, die mehrere in einem Teil integrierte Führungsbahnen besaßen, können entfallen. Darüber hinaus können die einzelnen Führungsschienen auch einfacher und schneller geändert werden. Muß beispielsweise die Geometrie der zweiten Führungsschiene geändert werden, muß nicht das gesamte Führungssystem geändert werden, vielmehr reicht es aus, nur die zweite Führungsschiene an die neuen Anforderungen anzupassen. Die Geometrie der Schnittstelle zwischen beiden Führungsschienen kann beibehalten werden, so daß z. B. durch standardisierte Verbindungsgeometrien trotz der Änderung an den Führungsschienen die Werkzeuge zum Verbinden der Führungsschienen die selben bleiben können. Somit können auch sehr einfach Baukastensysteme mit unterschiedlichen Führungsschienen zusammengestellt werden. Durch Kombination von unterschiedlichen Standardprofilen können die Führungssysteme dem jeweiligen Bedarf schnell und kostengünstig angepaßt werden. Ferner kann die zweite Führungsschiene z.B. für eine Zusatzausstattung verwendet werden, so daß das Fahrzeug in der Grundausstattung nur mit der ersten Führungsschiene ausgestattet wird. Bei bisherigen Systemen wurde die Länge der einzelnen Führungsschienen durch die längste Führungsbahn bestimmt. Teilweise wurde die Führungsschiene deshalb im Bereich der kürzeren Führungsbahn bearbeitet, um keinen unnötigen Bauraum zu benötigen. Mit der Erfindung können unterschiedlich lange Führungsschienen ohne Nachbearbeitung kombiniert werden. Die Verbindung der Führungsschienen erfolgt formschlüssig, vorzugsweise ohne Vorsehen von separaten Verbindern.

Die Erfindung ist besonders vorteilhaft, wenn die Führungsbahnen gekrümmt verlaufen, beispielsweise bei einem Fahrzeugdach, wo die Längsführungen für den Deckel oder Sonnenschutzsysteme den gekrümmten Längsholmen des Dachrahmens der heutzutage üblichen Kuppeldächer angepaßt sind. Diese Längsholme des Dachrahmens sind ja oft nicht nur, von der Seite des Fahrzeugs gesehen, bogenförmig verlaufend, sondern, in Draufsicht auf das Fahrzeug, auch zum vorderen und hinteren Ende nach außen gekrümmt verlaufend ausgeführt. Die Erfindung sieht gemäß einer Ausgestaltung vor, daß die erste Führungsschiene als ein langgestreckter, über seine Länge gekrümmter Körper und die zweite Führungsschiene als langgestreckter, mit einer anderen oder ohne Krümmung versehener Körper ausgebildet ist. Die zweite Führungsschiene wird elastisch gebogen und aufgrund der unterschiedlichen Krümmungen unter Vorspannung an der ersten Führungsschiene befestigt. Das bedeutet, die zweite Führungsschiene muß überhaupt nicht der Fahrzeugkontur angepaßt sein, vielmehr wird der zweiten Führungsschiene der gewünschte Krümmungsverlauf durch Befestigen an der gekrümmten ersten Führungsschiene aufgezwungen. Damit ist beispielsweise die zweite Führungsschiene unabhängig vom Fahrzeugtyp immer quasi als Lagerteil verfügbar und kann deshalb als Standardbauteil ohne zusätzliche Anpassung verwendet werden.

In diesem Zusammenhang ist es vorteilhaft, wenn die Führungsschienen durch Verschiebung in Längsrichtung zueinander ineinandergreifende Fortsätze besitzen. Die Führungsschienen werden zueinander versetzt teilweise ineinandergeschoben, wodurch sich ein über die gesamte Länge erstreckender Formschluß ergibt.

Die Fortsätze, mit denen die Führungsschienen ineinandergreifen, sind z.B. sich über die Länge zumindest einer Führungsschiene verlaufende angeformte Schenkel.

Die Materialien der Führungsschienen können völlig unterschiedlich sein, vorzugsweise ist die erste Führungsschiene aus Metall und die zweite aus Kunststoff. Die erste Führungsschiene soll z. B. den Deckel eines Schiebe-Hebedachs führen und muß somit höheren mechanischen Belastungen standhalten als die zweite Führungsschiene, die beispielsweise einen wesentlich leichteren, unter dem Dekkel angeordneten Sonnenschutz, z. B. ein Rollo, führt.

Wie bereits erwähnt sollten zur optimalen Führung seitlich der Fahrzeugteile jeweils vorzugsweise parallele Paare aus einer ersten und einer zweiten Führungsschiene angeordnet sein.

Das erfindungsgemäße Verfahren zum Herstellen eines fahrzeugfesten Führungssystems für verstellbare Fahrzeugteile, nämlich einen Deckel eines Schiebe-Hebedachs und ein Sonnenschutzsystem, insbesondere einen Sonnenschutz, ein Rollo oder einen Himmelrahmen, sieht folgende Schritte vor:
a) eine erste Führungsschiene aus einem ersten Material wird hergestellt,
b) eine zweite Führungsschiene aus einem zweiten, anderen Material wird hergestellt, und
c) die beiden Führungsschienen werden formschlüssig unmittelbar miteinander verbunden, indem wenigstens einer der beiden Führungsschienen an der anderen Führungsschiene angreift.

Wie bereits erwähnt wird vorzugsweise eine Führungsschiene gebogen, insbesondere elastisch gebogen, wenn sie an der anderen Führungsschiene befestigt wird.

Im befestigten Zustand bleibt dann die Führungsschiene in ihrem gebogenen Zustand aufgrund der hohen Steifigkeit der anderen Führungsschiene.

In diesem Zusammenhang ist es natürlich vorteilhaft, wenn die Führungsschiene mit höherer Biegesteifigkeit die gewünschte Biegung oder Krümmung des späteren Führungssystems besitzt, so daß sich die weichere, ungebogene Führungsschiene der steiferen Führungsschiene anpassen muß.

Die beiden Führungsschienen sind, wie bereits erwähnt, einerseits aus Metall und andererseits aus Kunststoff, wie die bevorzugte Ausführungsform vorsieht.

Zumindest eine der Führungsschienen wird durch Extrudieren hergestellt.

Das Biegen der Führungsschiene zum Angreifen an der anderen Führungsschiene erfolgt dann, wenn beide Führungsschienen bereits aneinander anliegen, so daß die Führungsschienen vorgespannt miteinander gekoppelt werden. Durch Wärmelagerung kann die Kraft zwischen den Führungsschienen und damit die Spannung gezielt verringert werden.

Eine weitere Ausfiihrungsform der Erfindung sieht vor, daß die beiden Führungsschienen durch Formschlußverbindungen miteinander verbunden sind, indem zumindest eine Führungsschiene z.B. angeformte Rastnasen oder Schenkel hat, die in Ausnehmungen in der anderen Führungsschiene einrasten können.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine schematische Draufsicht eines Fahrzeugs mit einem Schiebe-Hebedach, das mit dem erfindungsgemäßen Führungssystem ausgestattet ist, mit leicht geöffnetem Fahrzeugdach und zur Übersicht seitlich herausgezogenen, stark schematisch dargestellten Führungsschienen,
Figur 2 eine Ansicht des Fahrzeugdachs nach Figur 1 im vollständig geöffneten Zustand,
Figur 3 eine Querschnittsansicht durch den in Fahrtrichtung rechten Seitenrand des Schiebe-Hebedachs samt dem rechten Führungssystem nach der Erfindung, ohne Längsholm des Daches gezeigt, und
Figur 4 eine Querschnittsansicht durch das rechte Führungssystem nach der Erfindung gemäß einer zweiten Ausführungsform.

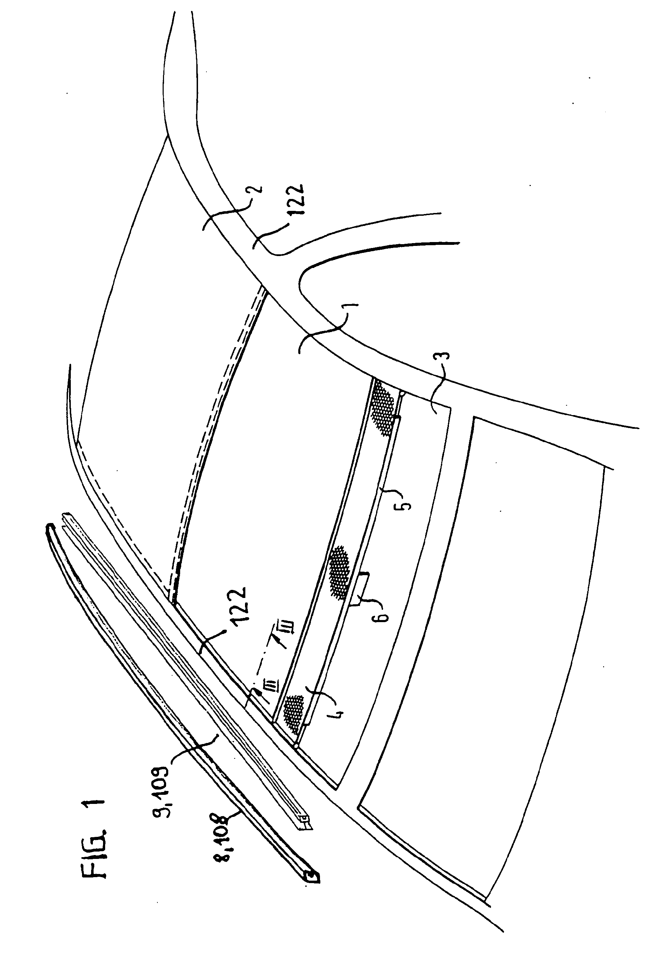

In Figur 1 ist ein Fahrzeugschiebe-Hebedach dargestellt, das einen längsverschieblichen Deckel 1 aufweist, der einen Teil der Fahrzeughaut bildet. Der Deckel 1 kann zum Öffnen des Daches und zum Freigeben einer Dachöffnung 3 unter die feste Dachhaut 2 verfahren werden.

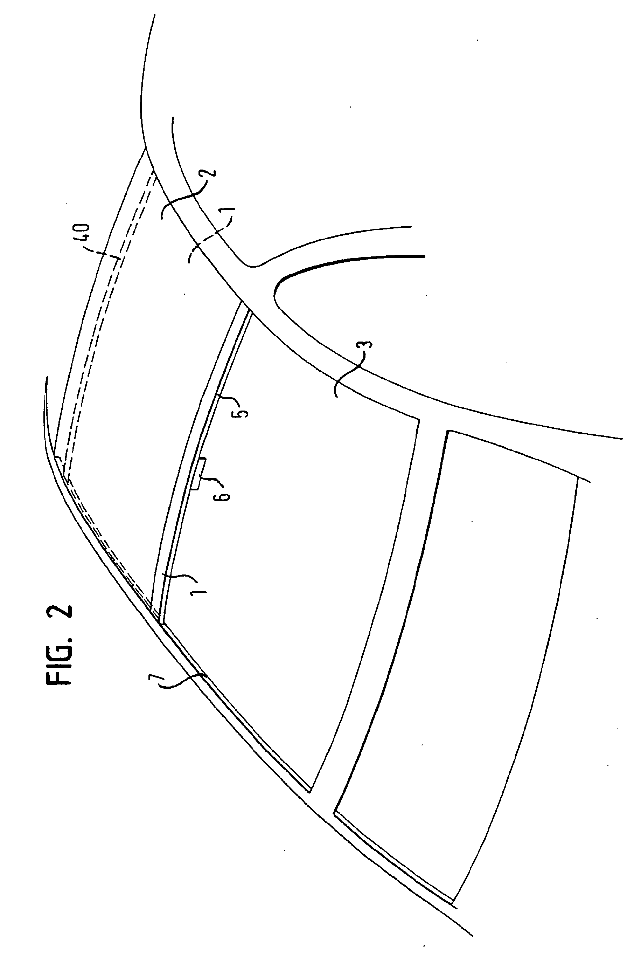

In Figur 2 ist die Dachöffnung 3 vollständig freigelegt.

Der Deckel 1 und die Dachhaut 2 können aus Glas sein und beispielsweise ein sogenanntes Panoramadach bilden. Unterhalb zumindest des Deckels 1 vorzugsweise auch der Dachhaut 2, wenn diese aus Glas ist, ist ein variabler Sonnenschutz in Form eines längsverfahrbaren Rollos 4 vorgesehen. Das Rollo 4 hat üblicherweise ein Textilmaterial, das an einem vorderen Spriegel 5 befestigt wird, der über einen Handgriff 6 verschieblich ist.

Sowohl der Deckel 1, als auch das Rollo 4 werden links und rechts in zugeordneten Führungsschienen längsverschieblich gelagert. Die Führungsschienen werden links und rechts zu einem jeweiligen linken bzw. rechten Führungssystem 7 zusammengefaßt.

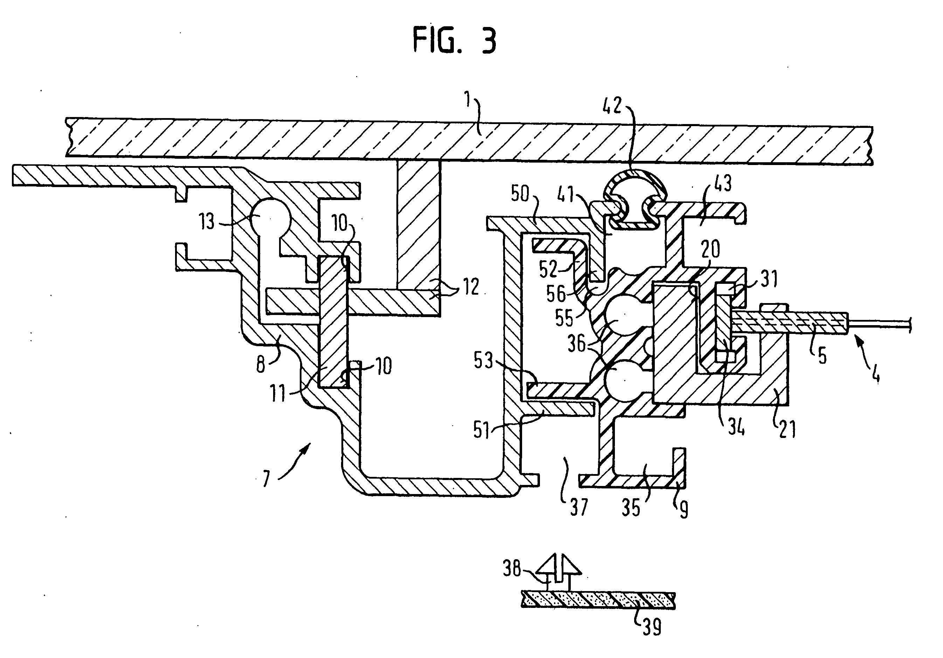

Eine Ausführungsform des Führungssystems 7 ist in Figur 3 anhand des in Fahrzeugrichtung rechten Führungssystems dargestellt. Das linke Führungssystem ist spiegelbildlich. Das Führungssystem 7 umfaßt eine erste Führungsschiene 8 aus einem Aluminiumprofil, das extrudiert ist, und eine zweite Führungsschiene 9 aus Kunststoff, welche ebenfalls durch Extrudieren hergestellt wird. Die erste Führungsschiene 8 hat eine Führungsbahn 10, in die ein Kulissenstein 11 hineinragt, der mit dem Deckel 1 verbunden ist. Die Verbindungsteile 12 sind nur schematisch dargestellt und sind nicht als einschränkend anzusehen. Die erste Führungsschiene 8 hat darüber hinaus einen im Querschnitt kreissegmentförmigen Kabelkanal 13, in dem ein nicht gezeigtes drucksteif geführtes Antriebskabel für den Kulissenstein 11 untergebracht ist. Natürlich sind zumindest vorzugsweise zwei an den Enden des Deckels 1 angeordnete Kulissensteine 11 vorgesehen, um eine stabile Führung des Deckels, der ein erstes verstellbares Fahrzeugteil darstellt, zu gewährleisten.

Die zweite Führungsschiene 9 muß lediglich das leichte Rollo 4 (zweites verstellbares Fahrzeugteil) haltern und führen, weshalb es aus weniger biegesteifem Kunststoff hergestellt ist. Die zweite Führungsschiene 9 hat eine Führungsbahn 20, in der ein Gleiter 21 für den Querspriegel 5 längsverschieblich gelagert ist. Darüber hinaus ist ein C-förmiger Führungskanal 31 in der zweiten Führungsschiene 9 ausgeformt, der als Seitenführung für den textilen Abschnitt des Rollos 4 dient. Seitlich an den textilen Rand des Rollos 4 ist ein flexibles Gleitprofil oder sind mehrere Gleitsteine 34 angespritzt.

Die zweite Führungsschiene 9 hat darüber hinaus mehrere kanalförmige Ausnehmungen für verschiedene Zwecke. Ein Aufnahmeraum 35 nimmt Antriebselemente oder Abdeckelemente auf. Kabelkanäle 36 nehmen antriebs-, signalund/oder energieübertragende Kabel auf. In den Kanal 37 dringen Clipse 38 zur Befestigung des Innenhimmels 39 ein. Zudem kann die Rollokassette 40 (siehe Figur 2) mit der darin integrierten Aufwickelautomatik im Kanal 37 fixiert werden. Im Kanal 41 wird eine Akustik-Steckdichtung 42 fixiert und im Kanal 43 ein nicht dargestellter Windabweiser.

Der Kanal 41 wird im übrigen abschnittsweise durch beide Führungsschienen 8, 9 begrenzt.

Die Führungsschienen 8, 9 sind durch ineinandergreifende Fortsätze formschlüssig unmittelbar miteinander verbunden und liegen großflächig und vorgespannt aneinander an. Die Verbindung erfolgt über eine formschlüssige, standardisierbare Geometrie, die es erlaubt, die Führungsschienen 8, 9 außerhalb dieser Geometrie unterschiedlich auszuführen, um eine Art Baukastensystem zu schaffen, durch die verschiedene Führungsschienen 8, 9 miteinander kombiniert werden können. Die Führungsschienen 8, 9 haben, im Querschnitt gesehen, Fortsätze in Form von Schenkeln 50, 51 bzw. 52, 53. Die Schenkel 52, 53 der zweiten Führungsschiene 9 liegen in einem Aufnahmeraum der ersten Führungsschiene 8, wobei der Aufnahmeraum durch die Schenkel 50, 51 definiert ist. Der Schenkel 52 liegt innenseitig am Schenkel 50 und der Schenkel 53 innenseitig am Schenkel 51 an. Die zweite Führungsschiene 9 hat darüber hinaus eine Ausnehmung in Form einer Hinterschneidung 55, in die der freie Rand 56 des Schenkels 50 hineinragt.

Wie in Figur 1 dargestellt ist, ist die Führungsschiene 8 oder 108 dem Verlauf des entsprechenden Längsholms 122 des Dachrahmens angepaßt, d.h. die Führungsschiene 8 besitzt eine Krümmung, gemäß der sie zu den Längsenden nach unten und nach außen verläuft. Die Führungsschiene 9 oder 109 jedoch ist im nicht-eingebauten Zustand quer zur Längsrichtung nicht gekrümmt. Beide Führungsschienen stellen langgestreckte Körper dar.

Die Führungsschienen 8, 9 werden vor ihrem Einbau miteinander verbunden, indem die Führungsschiene 9 mit den Schenkeln 52, 53 über die offene Stirnseite der Führungsschiene 9 in denjenigen Raum durch Längsbewegung hineingeschoben wird, der durch die Schenkel 50, 51 definiert ist. Bei diesem Längsverschieben der Führungsschienen 8, 9 wird der Führungsschiene 9 die Krümmung der Führungsschiene 8 auferlegt, d.h. im eingebauten Zustand liegen die Führungsschienen unter Vorspannung quer zur Längsrichtung aneinander an. Die Führungsschiene 9 ist dabei geringfügig kürzer als die Führungsschiene 8. In dem Bereich, in dem die Führungsschienen 8, 9 ineinandergreifen, ist die formschlüssige Verbindung über die gesamte Länge vorgesehen. Die Führungsschiene 9 wird beim Einsetzen in die Führungsschiene 8 elastisch gebogen, wobei bei extremer Krümmung natürlich auch eine plastische Biegung möglich wäre. Um die endgültige Relativposition in Längsrichtung festzulegen, können die Führungsschienen durch Arretiermittel (z.B. Bolzen, Schrauben), durch Kleben etc. aneinander und/oder am Dachholm fixiert werden.

Durch Wärmebehandlung oder Auslagern kommt es zu einem Kriechen und einer Spannungsverringerung zwischen den Führungsschienen, was gewünscht ist.

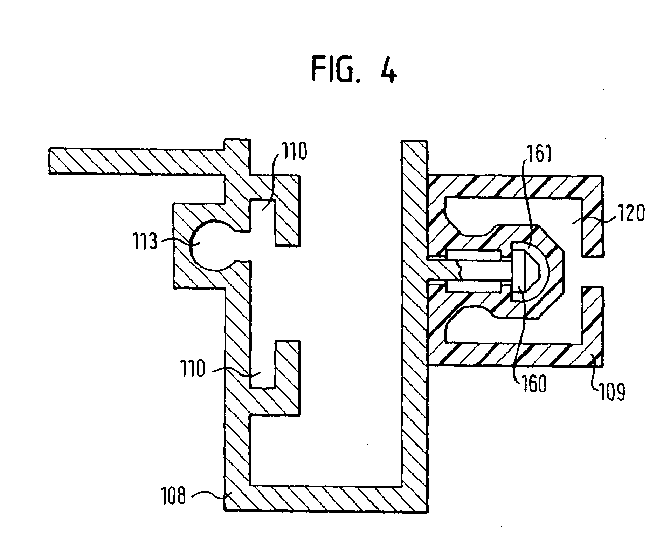

Die Ausführungsform nach Figur 4 weist ebenfalls eine erste Führungsschiene 108 aus extrudiertem Aluminium und eine zweite Führungsschiene 109 aus extrudiertem Kunststoff auf, die beide unmittelbar formschlüssig miteinander verbunden sind. Bereits im Zusammenhang mit Figur 3 erläuterte Abschnitte sind teilweise auch hier vorgesehen, sie werden, sofern funktionsgleich, mit den bereits eingeführten Bezugszahlen, erhöht um 100 versehen. Der Unterschied zwischen diesen beiden Ausführungsformen besteht vor allen darin, daß die beiden Führungsschienen 108, 109 durch eine Rastverbindung miteinander formschlüssig verbunden sind. Hierzu sind an die erste Führungsschiene 108 seitlich abstehende Fortsätze in Form von Rastnasen 160 angeformt, die in eine schlitzförmige Ausnehmung 161, die eine Hinterschneidung aufweist, einrastet. Im verrasteten Zustand liegen die Führungsschienen 108, 109 vorgespannt aneinander an, da auch bei dieser Ausführungsform die Führungsschiene 109 im noch nicht zusammengebauten Zustand quer zur Längsrichtung keine Krümmung besitzt und beim Montieren elastisch gebogen wird, um sich dem Verlauf der Führungsschiene 108 anzupassen. Auch bei dieser Ausführungsform ist eine Wärmebehandlung oder ein Auslagern möglich.

Alternativ kann natürlich die Führungsschiene 109 bei dieser Ausfiihrungsform auch durch Längsverschiebung auf die Rastnasen 160 aufgeschoben werden. Anstatt der Rastnasen 160 kann natürlich auch ein im Querschnitt ähnlicher Schenkel an die Führungsschiene 108 angeformt sein.

## Patentansprüche

1. Führungssystem für verstellbare Fahrzeugteile, mit
wenigstens einer ersten Führungsschiene (8) für das als Deckel eines Schiebe-Hebedachs ausgebildete erste Fahrzeugteil,
wenigstens einer zweiten Führungsschiene (9) für das als Sonnenschutzsystem, insbesondere Sonnenschutz, Rollo (4) oder Himmelrahmen ausgebildete zweite Fahrzeugteil, **dadurch gekennzeichnet, dass**
die erste und die zweite Führungsschiene (8, 9) aus zwei unterschiedlichen Materialien bestehen und formschlüssig miteinander verbunden sind.

2. Führungssystem nach Anspruch 1, **dadurch gekennzeichnet, dass** die Führungsschienen (8, 9) unmittelbar miteinander verbunden sind.

3. Führungssystem nach einem der vorhergehenden Ansprüche, **dadurch gekennzeichnet, dass** die Führungsschienen (8, 9) formschlüssig ineinandergreifende Abschnitte haben.

4. Führungssystem nach Anspruch 3, **dadurch gekennzeichnet, dass** die ineinandergreifenden Abschnitte auf der gesamten Länge, auf der die Führungsschienen (8, 9; 108, 109) miteinander verbunden sind, vorgesehen sind.

5. Führungssystem nach einem der vorhergehenden Ansprüche, **dadurch gekennzeichnet, dass** die erste Führungsschiene (8; 108) ein langgestreckter, quer zu seiner Längserstreckung gekrümmter Körper und die zweite Führungsschiene (9; 109) ein langgestreckter, mit einer anderen oder keiner Krümmung quer zur Längserstreckung versehener Körper ist, wobei die zweite Führungsschiene (9; 109) gebogen und aufgrund der unterschiedlichen Krümmungen der Führungsschienen (8, 9; 108, 109) unter Vorspannung an der ersten Führungsschiene (8; 108) befestigt ist.

6. Führungssystem nach einem der vorhergehenden Ansprüche, **dadurch gekennzeichnet, dass** die Führungsschienen (8, 9; 108, 109) durch eine Relativverschiebung zueinander in Längsrichtung miteinander in Eingriff kommende Fortsätze haben.

7. Führungssystem nach einem der vorhergehenden Ansprüche, **dadurch gekennzeichnet, dass** die Führungsschienen (8, 9; 108, 109) ineinandergreifende Fortsätze haben und die Fortsätze zumindest einer Führungsschiene über die Länge dieser Führungsschiene verlaufende Schenkel sind.

8. Führungssystem nach einem der vorhergehenden Ansprüche, **dadurch gekennzeichnet, dass** die Materialien der Führungsschienen (8, 9) unterschiedliche Steifigkeiten besitzen.

9. Führungssystem nach Anspruch 8, **dadurch gekennzeichnet, dass** die Führungsschiene (8; 108), die eine größere Steifigkeit, insbesondere Biegesteifigkeit, besitzt als die andere Führungsschiene (9; 109), quer zu ihrer Längserstreckung stärker gekrümmt ist als die andere Führungsschiene (9; 109).

10. Führungssystem nach einem der vorhergehenden Ansprüche, **dadurch gekennzeichnet, dass** die erste Führungsschiene (8) aus Metall und die zweite Führungsschiene (9) aus Kunststoff ist.

11. Führungssystem nach einem der vorhergehenden Ansprüche, **dadurch gekennzeichnet, dass** die Führungsschienen (8, 9; 108, 109) unterschiedliche Längen haben.

12. Führungssystem nach einem der vorhergehenden Ansprüche, **dadurch gekennzeichnet, dass** seitlich der Fahrzeugteile jeweils parallele Paare aus einer ersten und einer zweiten Führungsschiene (8, 9) angeordnet sind.

13. Verfahren zum Herstellen eines fahrzeugfesten Führungssystems für verstellbare Fahrzeugteile, nämlich einen Deckel (1) eines Schiebe-Hebedachs und ein Sonnenschutzsystem, insbesondere einen Sonnenschutz, ein Rollo (4) oder einen Himmelrahmen, **gekennzeichnet durch** folgende Schritte:
a) eine erste Führungsschiene (8) für den Deckel (1) wird aus einem ersten Material hergestellt;
b) eine zweite Führungsschiene (9) für das Sonnenschutzsystem wird aus einem anderen, zweiten Material hergestellt;
c) die Führungsschienen (8, 9) werden formschlüssig unmittelbar miteinander verbunden, indem wenigstens ein Fortsatz einer der beiden Führungsschienen (8, 9) an der anderen Führungsschiene (9, 8) angreift.

14. Verfahren nach Anspruch 13, **dadurch gekennzeichnet, dass** die Führungsschienen (8, 9; 108, 109) langgestreckte Körper sind und die erste Führungsschiene (8; 108) quer zur Längsrichtung gekrümmt verläuft, wobei als zweite Führungsschiene (9; 109) ein Körper mit geringerer oder größerer Krümmung quer zu dessen Längsrichtung verwendet wird, der beim Befestigen an der ersten Führungsschiene (8; 108) gebogen wird und durch die erste Führungsschiene (8; 108) im gebogenen Zustand bleibt.

15. Verfahren nach Anspruch 13 oder 14, **dadurch gekennzeichnet, dass** als erste Führungsschiene (8; 108) ein Körper verwendet wird, der eine höhere Biegesteifigkeit besitzt als die zweite Führungsschiene (9; 109).

16. Verfahren nach einem der Ansprüche 13 bis 15, **dadurch gekennzeichnet, dass** die erste und die zweite Führungsschiene (8, 9; 108, 109) durch Längsverschiebung zueinander formschlüssig ineinander eingreifen und dabei die zweite Führungsschiene (9; 109) gebogen wird.

17. Verfahren nach einem der Ansprüche 13 bis 16, **dadurch gekennzeichnet, dass** die Führungsschienen (8, 9; 108, 109) auf ihrer sich überschneidenden Länge formschlüssig ineinander eingreifend aneinander befestigt werden.

18. Verfahren nach einem der Ansprüche 13 bis 17, **dadurch gekennzeichnet, dass** die erste Führungsschiene (8) aus Metall, insbesondere Aluminium hergestellt wird.

19. Verfahren nach einem der Ansprüche 13 bis 18, **dadurch gekennzeichnet, dass** die zweite Führungsschiene (9) aus Kunststoff hergestellt wird.

20. Verfahren nach einem der Ansprüche 13 bis 19, **dadurch gekennzeichnet, dass** wenigstens eine der beiden Führungsschienen (8, 9) durch Extrudieren hergestellt wird.

21. Verfahren nach einem der Ansprüche 13 bis 20, **dadurch gekennzeichnet, dass** die beiden miteinander verbundenen Führungsschienen wärmegelagert werden.

22. Verfahren nach einem der Ansprüche 13 bis 21, **dadurch gekennzeichnet, dass** die Führungsschienen (8, 9) unmittelbar nach ihrem Verbinden zueinander vorgespannt sind.

## Claims

1. A guiding system for movable vehicular components, comprising
at least one first guide rail (8) for the first vehicular component that is in the form of a cover of a sliding-tilting roof,
at least one second guide rail (9) for the second vehicular component that is in the form of a sunshade system, in particular a sunshade, a window blind (4) or a roof lining frame, **characterized in that**
the first and second guide rails (8, 9) are made from two different materials and are connected with each other with a positive fit.

2. The guiding system according to claim 1, **characterized in that** the guide rails (8, 9) are directly connected with each other.

3. The guiding system according to either of the preceding claims, **characterized in that** the guide rails (8, 9) have sections which engage into each other with a positive fit.

4. The guiding system according to claim 3, **characterized in that** the sections engaging into each other are provided over the entire length along which the guide rails (8, 9; 108, 109) are connected with each other.

5. The guiding system according to any of the preceding claims, **characterized in that** the first guide rail (8; 108) is an elongate body which is curved transversely to its longitudinal extent and the second guide rail (9; 109) is an elongate body which is provided with a different or no curvature transversely to the longitudinal extent, the second guide rail (9; 109) being bent and fastened with a pretension to the first guide rail (8; 108) due to the different curvatures of the guide rails (8, 9; 108, 109).

6. The guiding system according to any of the preceding claims, **characterized in that** the guide rails (8, 9; 108, 109) have protrusions which come into engagement with each other by a relative displacement in relation to each other in the longitudinal direction.

7. The guiding system according to any of the preceding claims, **characterized in that** the guide rails (8, 9; 108, 109) have protrusions engaging into each other and the protrusions of at least one guide rail are legs that extend across the length of this guide rail.

8. The guiding system according to any of the preceding claims, **characterized in that** the materials of the guide rails (8, 9) have different rigidities.

9. The guiding system according to claim 8, **characterized in that** the guide rail (8; 108) that has a greater rigidity, in particular flexural rigidity, than the other guide rail (9; 109) has a more pronounced curvature transverse to its longitudinal extent than the other guide rail (9; 109).

10. The guiding system according to any of the preceding claims, **characterized in that** the first guide rail (8) is made of metal and the second guide rail (9) is made of plastics.

11. The guiding system according to any of the preceding claims, **characterized in that** the guide rails (8, 9; 108; 109) are different in length.

12. The guiding system according to any of the preceding claims, **characterized in that** parallel pairs of one first and one second guide rail (8, 9) are arranged at the sides of each vehicular component.

13. A method of producing a vehicle-fixed guiding system for movable vehicular components, namely, a cover (1) of a sliding-tilting roof and a sunshade system, in particular a sunshade, a window blind (4) or a roof lining frame, **characterized by** the following steps:
a) a first guide rail (8) for the cover (1) is produced from a first material;
b) a second guide rail (9) for the sunshade system is produced from a different, second material;
c) the guide rails (8, 9) are directly connected with each other with a positive fit by at least one protrusion of one of the two guide rails (8, 9) engaging the other guide rail (9, 8).

14. The method according to claim 13, **characterized in that** the guide rails (8, 9; 108, 109) are elongate bodies and the first guide rail (8; 108) runs curved transversely to the longitudinal direction, a body having a smaller or greater curvature transversely to the longitudinal direction thereof being used for the second guide rail (9; 109) and being bent during fastening to the first guide rail (8; 108) and staying in the bent condition due to the first guide rail (8; 108).

15. The method according to claim 13 or 14, **characterized in that** for the first guide rail (8; 108) a body is used which has a higher flexural rigidity than the second guide rail (9; 109).

16. The method according to any one of claims 13 to 15, **characterized in that** the first and second guide rails (8, 9; 108, 109) engage into each other with a positive fit by a longitudinal displacement relative to each other and the second guide rail (9; 109) is bent in the process.

17. The method according to any one of claims 13 to 16, **characterized in that** on their overlapping lengths the guide rails (8, 9; 108, 109) are fastened to each other so as to engage into each other with a positive fit.

18. The method according to any one of claims 13 to 17, **characterized in that** the first guide rail (8) is produced from metal, in particular aluminum.

19. The method according to any one of claims 13 to 18, **characterized in that** the second guide rail (9) is produced from plastics.

20. The method according to any one of claims 13 to 19, **characterized in that** at least one of the two guide rails (8, 9) is produced by extrusion.

21. The method according to any one of claims 13 to 20, **characterized in that** the two guide rails connected with each other are aged under heat.

22. The method according to any one of claims 13 to 21, **characterized in that** the guide rails (8, 9) have a pretension in relation to each other immediately after they have been connected.

## Revendications

1. Système de guidage pour des pièces de véhicule mobiles, comportant
au moins un premier rail de guidage (8) pour la première pièce de véhicule qui est réalisée sous forme de couvercle de toit coulissant/basculant,
au moins un deuxième rail de guidage (9) pour la deuxième pièce de véhicule qui est réalisée sous forme de système de protection solaire, en particulier de protection solaire, de store (4) ou de cadre de ciel de toit, **caractérisé en ce que**
le premier et le deuxième rail de guidage (8, 9) sont réalisés en deux matières différentes et sont reliés l'un à l'autre par coopération de formes.

2. Système de guidage selon la revendication 1, **caractérisé en ce que** les rails de guidage (8, 9) sont directement reliés l'un à l'autre.

3. Système de guidage selon l'une des revendications précédentes, **caractérisé en ce que** les rails de guidage (8, 9) présentent des tronçons qui s'engrènent par coopération de formes.

4. Système de guidage selon la revendication 3, **caractérisé en ce que** les tronçons qui s'engrènent sont prévus sur toute la longueur sur laquelle les rails de guidage (8, 9 ; 108, 109) sont reliés l'un à l'autre.

5. Système de guidage selon l'une des revendications précédentes, **caractérisé en ce que** le premier rail de guidage (8 ; 108) est un corps allongé et courbé perpendiculairement à son extension longitudinale, et **en ce que** le deuxième rail de guidage (9; 109) est un corps allongé pourvu d'une courbe différente ou sans courbe perpendiculairement à l'extension longitudinale, le deuxième rail de guidage (9 ; 109) étant recourbé et fixé sous précontrainte sur le premier rail de guidage (8 ; 108) en raison des courbes différentes des rails de guidage (8, 9 ; 108, 109).

6. Système de guidage selon l'une des revendications précédentes, **caractérisé en ce que** les rails de guidage (8, 9 ; 108, 109) présentent des saillies qui parviennent en prise par un déplacement relatif l'un par rapport à l'autre selon le sens longitudinal.

7. Système de guidage selon l'une des revendications précédentes, **caractérisé en ce que** les rails de guidage (8, 9 ; 108, 109) présentent des saillies qui s'engrènent et **en ce que** les saillies d'au moins un rail de guidage sont des branches qui s'étendent sur la longueur de ce rail de guidage.

8. Système de guidage selon l'une des revendications précédentes, **caractérisé en ce que** les matières des rails de guidage (8, 9) ont différentes rigidités.

9. Système de guidage selon la revendication 8, **caractérisé en ce que** le rail de guidage (8 ; 108) qui présente une rigidité, en particulier une rigidité flexionnelle supérieure à celle de l'autre rail de guidage (9 ; 109) est plus fortement courbé perpendiculairement à son extension longitudinale que l'autre rail de guidage (9 ; 109).

10. Système de guidage selon l'une des revendications précédentes, **caractérisé en ce que** le premier rail de guidage (8) est en métal et **en ce que** le deuxième rail de guidage (9) est en matière plastique.

11. Système de guidage selon l'une des revendications précédentes, **caractérisé en ce que** les rails de guidage (8, 9 ; 108, 109) ont différentes longueurs.

12. Système de guidage selon l'une des revendications précédentes, **caractérisé en ce que** des paires parallèles composées d'un premier et d'un deuxième rail de guidage (8, 9) sont respectivement agencées latéralement aux pièces de véhicule.

13. Procédé de fabrication d'un système de guidage solidaire au véhicule pour des pièces de véhicule mobiles, c'est-à-dire un couvercle (1) d'un toit coulissant/basculant et un système de protection solaire, en particulier une protection solaire, un store (4) ou un cadre de ciel de toit, **caractérisé par** les étapes suivantes :
a) un premier rail de guidage (8) pour le couvercle (1) est réalisé en une première matière ;
b) un deuxième rail de guidage (9) pour le système de protection solaire est réalisé en une deuxième matière différente ;
c) les rails de guidage (8, 9) sont reliés directement l'un à l'autre par coopération de formes en ce qu'au moins une saillie de l'un des deux rails de guidage (8, 9) s'engage sur l'autre rail de guidage (9, 8).

14. Procédé selon la revendication 13, **caractérisé en ce que** les rails de guidage (8, 9 ; 108, 109) sont des corps allongés et **en ce que** le premier rail de guidage (8; 108) s'étend de manière courbée perpendiculairement au sens longitudinal, un corps présentant une courbe inférieure ou supérieure perpendiculairement à son sens longitudinal étant utilisé comme deuxième rail de guidage (9 ; 109), le corps étant recourbé lors de la fixation sur le premier rail de guidage (8 ; 108) et restant dans l'état recourbé grâce au premier rail de guidage (8 ; 108).

15. Procédé selon la revendication 13 ou 14, **caractérisé en ce qu'**un corps qui présente une rigidité flexionnelle supérieure à celle du deuxième rail de guidage (9 ; 109) est utilisé comme premier rail de guidage (8 ; 108).

16. Procédé selon l'une des revendications 13 à 15, **caractérisé en ce que** le premier et le deuxième rail de guidage (8, 9 ; 108, 109) s'engrènent l'un dans l'autre par coopération de formes par un déplacement longitudinal l'un par rapport à l'autre, le deuxième rail de guidage (9 ; 109) étant alors recourbé.

17. Procédé selon l'une des revendications 13 à 16, **caractérisé en ce que** les rails de guidage (8, 9 ; 108, 109) sont fixés l'un sur l'autre sur leur longueur de chevauchement de manière à s'engrener l'un dans l'autre par coopération de formes.

18. Procédé selon l'une des revendications 13 à 17, **caractérisé en ce que** le premier rail de guidage (8) est réalisé en métal, en particulier en aluminium.

19. Procédé selon l'une des revendications 13 à 18, **caractérisé en ce que** le deuxième rail de guidage (9) est réalisé en matière plastique.

20. Procédé selon l'une des revendications 13 à 19, **caractérisé en ce qu'**au moins l'un des deux rails de guidage (8, 9) est réalisé par extrusion.

21. Procédé selon l'une des revendications 13 à 20, **caractérisé en ce que** les deux rails de guidage reliés l'un à l'autre sont thermiquement durcis.

22. Procédé selon l'une des revendications 13 à 21, **caractérisé en ce que** les rails de guidage (8, 9) sont précontraints l'un par rapport à l'autre directement après leur raccordement.
